# EUROPEAN PATENT SPECIFICATION

(11) **EP 3 336 815 B1**
(45) Date of publication and mention of the grant of the patent: **09.10.2024**
(21) Application number: 16835531.1
(22) Date of filing: 10.08.2016
(51) Int. Cl.: G08B 17/00, G08B 17/04

(54) **COMPOSITE MATERIAL FOR SIGNALLING LOCAL OVERHEATING OF ELECTRICAL EQUIPMENT**
VERBUNDSTOFF ZUR SIGNALISIERUNG VON LOKALER ÜBERHITZUNG EINER ELEKTRISCHEN AUSRÜSTUNG
MATÉRIAU COMPOSITE POUR FORMER UN SIGNAL ANNONÇANT DES SURCHAUFFES LOCALES D'ÉQUIPEMENTS ÉLECTRIQUES

(30) Priority: 10.08.2015 RU 2015133303
(43) Date of publication of application: 20.06.2018
(73) Proprietor: Limited Liability Company "Termoelektrica", Moscow 143026 (RU)
(72) Inventor: LESIV, Aleksey Valeryevich, Dolgoprudny 141707 (RU)
(74) Representative: Chimini, Francesco
(86) International application number: PCT/RU2016/000530
(87) International publication number: WO 2017/026921

(56) References cited:
- EP-A1- 2 249 323
- JP-A- H0 666 648
- JP-A- S61 138 132
- US-A- 4 230 808
- US-A1- 2008 188 590

## Description

### Field of the invention

The invention relates to materials suitable for being used as pre-fire situations control for fires resulting from local overheating of electrical equipment and is intended to prevent fires resulting from such malfunctions.

### Background of the invention

To date, more than 20% of all fires occur due to violations in the operation of the electrical equipment and electrical devices. Most often, ignition occurs in the area of electrical contacts.

As a rule, a fire does not occur spontaneously. It is usually preceded by a prolonged breakdown of the wire at the junction points. At the same time the current intensity does not increase dramatically, as in the case of a short circuit, therefore, electromagnetic releases used in modem circuit breakers can not be used for protection in such situations.

So, with poor contact in sockets or switchboards there is an increased resistance, and, consequently, a source of increased temperature. The wire is deformed by the action of thermal expansion, and multiple cycles of heating and cooling make its deformation critical. In the place of constriction the wire becomes thinner, its oxidation occurs. As a consequence, the resistance at the junction point keeps on increasing, and as a result, heating increases even more. Ultimately, this can lead to a fire.

To avoid such situations, it is advisable to have a simple method that allows detecting such a defect at an early stage, since eliminating the cause of overheating is much less resource-intensive and labor-consuming than eliminating the consequences of a fire.

The background of the invention knows various pre-fire situations alarms representing functional analogues of the material of the present invention.

Thus, a method is known for diagnostics of a pre-fire situation and preventing a fire, including measuring the intensity of monochromatic radiation emitted by a pulsed source at the frequency of its absorption by thermal destruction products of the identified materials, and generating a control signal for fire alarm when the concentrations of their admissible values are exceeded [1].

The disadvantages of the known method include its low reliability, high probability of false responses, as well as insufficiently early detection of fires, which is caused by the development of a control signal without taking into account the rate of increase in concentration and the assessment of a fire hazard situation with respect to the concentrations of insufficient quantities of controlled gas components.

A method and a device for detecting a pre-fire situation based on the infrared spectroscopy is known. The device comprises an optically coupled source and a radiation receiver coupled to the first amplifier and a processing pattern that includes two radiation receivers, the second and the third amplifier which, together with the first amplifier, are connected to an analog-to-digital converter through the respective blocks of admissible concentrations of fire hazardous components, the output of the converter is connected through the microprocessor and digital-to-analog converter to the alarm unit, while the second output of the microprocessor is connected to the monitor. It is designed to detect the products of thermal decomposition of various organic materials formed under the influence of a non-standard heat source, which can arise, in particular, as a result of sparking or short-circuiting in the electrical commutation equipment. [2].

The disadvantage of the known technical solution is that it reacts to the appearance of gases and smoke accompanying the already started ignition, i.e. it gives a signal after the start of the fire.

A device is known which is being a junction box containing a temperature change sensor connected to the microprocessor control unit [3].

The disadvantage of this device is its relatively high cost, as well as the fact that it does not provide continuous monitoring of any point of the electrical network or electrical unit.

As an alternative method for diagnosing the pre-fire situation, it is proposed to apply a special formulation to the current-conducting part, which, when heated above a certain temperature, emits an odorant - a substance having a specific, warning odor.

Odorants are currently used to give a warning odor to a natural gas and liquefied gases used for industrial purposes. They can detect leaks in gas utility lines and equipment, as well as the presence of gases in industrial and residential areas long before they are accumulated in explosive or toxic concentrations. As odorants, sulfur-containing compounds are usually used: amercaptans (methyl mercaptan, ethyl mercaptan, propyl mercaptan, isopropyl mercaptan, etc.) and sulphides (dimethyl sulfide, diethyl sulfide, dimethyl disulphide, etc.). A more intense and stable odor compared to individual components is a mixture of several odorants.

Since odorants have a very strong smell, they shall be stored hermetically-sealed and released strictly at the time of the wiring overheating. As a system that releases odorants upon heating, a device made of a crosslinked polymeric composite material having an explosive destruction temperature in the range of 80-200 ° C, including odorants as fillers, can be used.

Structural analogues of the invention material are composite fire extinguishing materials containing fire extinguishing agents.

There is a known composition for an extinguishing coating comprising microencapsulated 1,2-dibromotetrafluoroethane (R-114B2 refrigerant) with a cured gelatin shell in a binder containing an epoxy resin, epoxidized polyoxychloropropylene glycerol ether, and polyethylene polyamine [4].

An extinguishing composition containing microcapsules with a core of an extinguishing agent, which are halocarbons surrounded by a coating of polymeric material distributed in a polymer binder is known. At that the polymeric binder is water-soluble or water-insoluble polymers in the form of solutions or dispersions in water or organic solvents, respectively. The material of the shell is polyurea and / or polyurethane based on polyisocyanate prepolymer. The microcapsules have different sizes in the range 2.0-100.0 µm [5].

The closest structural analogue is a microencapsulated fire extinguishing agent containing microcapsules having a core of extinguishing liquid disposed within a spherical polymer shell made of a cured spatially crosslinked polymeric material and containing mineral filler nanoparticles in the form of plates having a thickness of 1-5 nm, and the specified agent has the capability of explosion-like destruction in the temperature range of 90-230 ° C. The microcapsules can have an outer diameter in the range of 50-400 µm and a core of an extinguishing liquid, by weight of 75-95% of the weight of the microcapsule's weight, which is a bromine-containing or fluorobrom-containing extinguishing liquid, perfluoroethyl perfluoroisopropyl ketone and / or dibromomethane or a mixture of fire extinguishing liquids selected from the group consisting of: perfluoroethyl perfluoroisopropyl ketone, dibromomethane, bromo-substituted hydrocarbons, fluorobromosubstituted hydrocarbons in the liquid state. The spherical polymeric shell can be made, for example, of a complex of polyvinyl ethanol and urea-resorcinol-formaldehyde resin or crosslinked gelatin, and may contain a mineral filler in an amount of 1-5% by weight of the shell, in the form of nano-sized plates of natural montmorillonite aluminosilicate or analogues thereof in an exfoliated state. The specified microcapsules can be used for fire extinguishing purposes in the composition of fire extinguishing composite structural material [6].

Thus, all the described fire extinguishing means are designed to eliminate the fire that has already arisen, and not to prevent it, which is the most effective way to fight fire.

The use of composite materials containing odorants for the detection of electrical faults is described in the Japanese patent application [7]. The disadvantage of the proposed composition is the use of hot melt polymers. When the heat-generating part is heated above the softening or melting temperature of the hot-melt polymer, it may be detached or drained to a part of the electrical equipment, for example, to the insulation of the wiring, the violation of which can lead to a short circuit. In addition, the description of the patent document [7] indicates that the odorant emission from the proposed polymer compositions occurs due to the melting of the material. This circumstance can be accompanied by unfavorable consequences for the electrical equipment, such as foaming and spraying of the polymeric mass with the evolved gas. Insertion of hot foamed mass, polymer droplets or polymer melt flowing off the sticker to the adjacent contacts, electrical equipment, blowers, sensors, can lead to malfunction or even ignition. In addition, for the registration of pre-fire situations one of the most significant criteria is the response speed of the system as a whole. For these purposes, the gas shall be released in a significant amount when the critical temperature is reached and quickly distributed in volume. This is possible only in the case of opening the material with a large excess pressure of gas inside the capsule (pores). In this case, the gas almost instantly leaves the material, is not occluded on it and reaches the sensor in the minimum time. Pore opening resulting from the melting of the polymer may be accompanied by the transition of the odorant to a hot melt composition (eg, dissolution) or to create a foam layer. In this case, the evaporation of gas from the surface will proceed slowly and will not lead to a one-time transition of the main amount of gas enclosed in the product into the gas phase.

The material described in the mentioned patent document JP 6-66648 [7] is considered by the authors to be the closest analogue of the present invention known from the prior art (prototype). The document US 2008/188590 discloses an intumescent fire retardant that comprises polymers cross-linked with sulfur and that generates unpleasant odour when detecting overheating.

### Description of the invention

The goal of the present invention is to create a polymeric composite material stable and safe in use, applied for early detection of pre-fire situations that arise as a result of local overheating of electrical equipment, when the heating of wires or electrical contacts exceeds the permissible operating parameters (> 100 ° C), but does not yet reach the level at which the thermal destruction of materials occurs, capable of ignition (> 250 ° C).

This objective is achieved by using a polymer composite material to form a signal about local overheating of electrical equipment, the continuous phase of which is formed by a thermosetting polymer filled with an odorant, which is sulfur dioxide, low-molecular-weight mercaptans, dialkyl sulfides, dialkyl disulfides or mixtures thereof, having an explosive destruction temperature in the range of 80-200 ° C.

The technical result of the claimed solution is to increase the probability of detecting a pre-fire situation at an early stage.

### BRIEF DESCRIPTION OF THE DRAWINGS

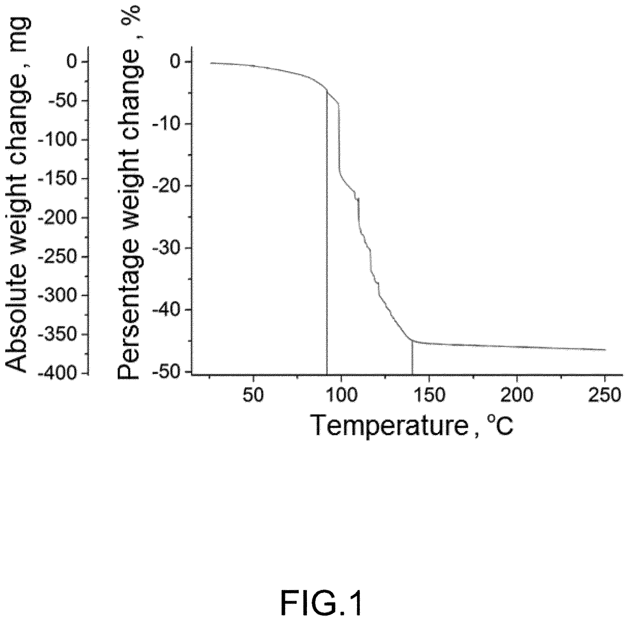

Fig. 1 shows the results of a thermogravimetric analysis of the microencapsulated composite material according to the invention prepared according to Example 1.

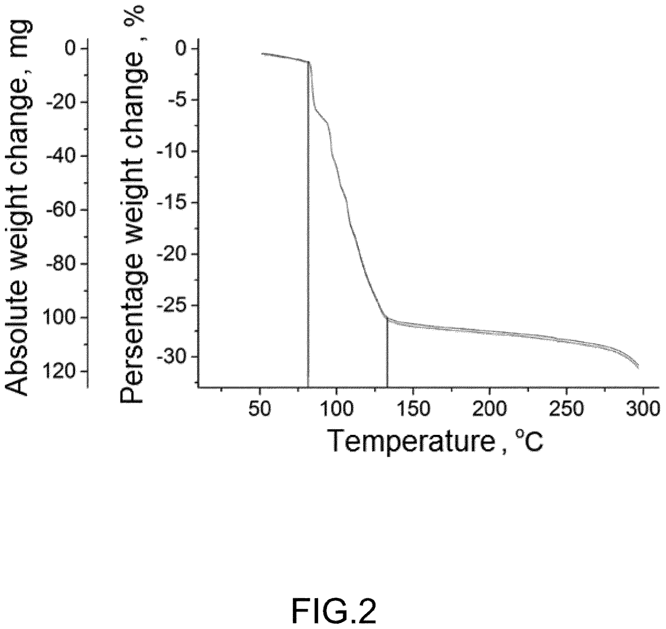

Fig. 2 shows the results of a thermo gravimetric analysis of the microencapsulated composite material according to the invention prepared according to Example 2.
Fig. 3 shows the results of a thermo gravimetric analysis of the microencapsulated composite material according to the invention prepared according to Example 3.
Fig. 4 shows the results of a thermo gravimetric analysis of the microencapsulated composite material according to the invention prepared according to Example 4.

### Detailed description of the invention

The present invention relates to the polymeric composite material filled with an odorant, which is sulfur dioxide, low-molecular-weight mercaptans, dialkyl sulfides, dialkyl disulfides or mixtures thereof, having an explosive destruction temperature in the range of 80-200 ° C, used to detect early pre-fire situations arising from local overheating of electrical equipment.

A distinctive feature of the polymeric composite material is the use of thermosetting polymers as polymeric materials. The use of thermosetting polymers can eliminate a number of disadvantages inherent in the prototype. Thermosetting polymers lose their integrity when heated, but they do not pass into a thermoplastic state, which excludes foaming of the material, detachment from the substrate, or flowing to current-conducting parts.

In addition, the opening of the proposed composite material based on a thermosetting polymer is not due to melting of the shell, but due to its rupture by high pressure of the superheated light-boiling substance. Since the destruction of the shell is explosive, the gas yield is significant regardless of the rate of heating. Thus, unlike the prototype, the proposed material makes it possible to record overheating of electrical equipment, even at ventilated objects and in large electric boards.

Another advantage of the crosslinked polymers is that the opening of pores in the proposed thermosetting polymers occurs not in a narrow temperature range, corresponding to the melting of the polymer (transition into a viscous state), but in a wide range. In crosslinked polymers, the opening (explosive destruction) of the shell occurs when the gas within the pore reaches the pressure of the corresponding shell strength. Because of the specific features of such polymers synthesis, the pores differ from each other both in size and thickness of the shell, and their opening occurs at different pressures and temperatures.

The latter circumstance causes one more important difference of the proposed invention. Since the opening of the polymer occurs over a wide range of temperatures and the destruction of a part of the pores at a lower opening temperature does not disrupt the integrity of other pores, having higher opening temperature, the offered material can respond repeatedly. In other words, if the proposed polymeric composite material is heated to the opening temperature in a predetermined range of opening temperatures, then cooled to a temperature lower than the specified opening temperature range, for example to a temperature corresponding to the permissible performance parameters of the equipment, and then reheated to the opening temperature in a predetermined a range of opening temperatures higher than the previous opening temperature, then upon repeated heating, there will also be sufficient gas release and system response to form the signal.

As fillers for the composite material, the present invention uses substances with a sharp, unpleasant odor. The human sense of smell is highly sensitive to such smells, so that a person usually reacts very quickly to the appearance of such substances in the atmosphere, even in fairly low concentrations. This makes it possible to detect malfunctions in the isolation of even relatively small amounts of these odorants, i.e. already at an early stage of overheating.

Odorants used in the present invention include, but are not limited to, sulfur dioxide, methyl mercaptan, ethyl mercaptan, n-propyl mercaptan, isopropyl mercaptan, n-butyl mercaptan, sec-butyl mercaptan, isobutyl mercaptan, tert-butyl mercaptan, amyl mercaptan, isoamyl mercaptan, hexyl mercaptan, dimethyl sulfide , diethylsulfide, diallyldisulfide, allyl methyl sulfide, methylethylsulfide, diisopropyl sulfide, dimethyl disulfide, diethyl disulfide, dipropyl disulfide, diisopropyl disulfide, or mixtures thereof.

Particularly preferred examples of odorants are methyl mercaptan, ethyl mercaptan, isopropyl mercaptan, isobutyl mercaptan, tert-butyl mercaptan, dimethyl sulfide, diethyl sulfide, methylethylsulfide, dimethyl disulfide, diethyl disulfide.

In some embodiments, the odorants are used in a mixture with solvents. The use of solvents allows achieving lower temperatures and narrower temperature ranges of the opening of the composite material while maintaining its mechanical characteristics.

Odorant solvents include, but are not limited to, hydrofluorochlorocarbons, hydrofluorocarbons, fluorocarbons, chlorocarbons, chlorofluorocarbons, perfluoro (ethylisopropyl ketone), alkanes, ethers, or mixtures thereof.

The use of fluorine-containing compounds as an odorant makes it possible to expand the scope of use of the proposed material due to the possibility of using an automatic gas sensor. A distinctive feature of fluorine-containing compounds is the capability to determine their presence in concentrations of about 0.001 ppm [8]. In addition, these compounds are absent in the air during normal operation of electrical equipment, which reduces the likelihood of false responses.

When using a mixture of odorant and solvents, the content of odorant in such a mixture may be 1-99*%*

According to the invention, the polymeric composite material is a porous cross-linked polymer particles with closed-type pores or channels filled with an odorant or odorant solution placed in a thermosetting polymeric matrix. The average particle size is preferably 200-5000 µm. The average pore diameter is preferably 10-100 µm.

As a porous polymer, polystyrene, polyorganosiloxanes, polyurethane, polyurea are offered.

The polymeric matrix included in the composite material includes, but is not limited to, polyvinyl acetate, epoxy resins, silicone.

A method of preparing the polymeric composite material comprising porous polymer particles with closed-type pores or channels filled with an odorant or an odorant solution placed in a polymeric matrix includes the following stages:

Toluene diisocyanate is added to the odorant solution in R-114B2 refrigerant, the resulting mixture is emulsified in an aqueous solution of polyvinyl alcohol until a homogeneous emulsion is obtained.

The solution of polyethylene polyamine (PEPA) in water is added and the resulting solution is allowed to stand within 24 hours.

The lower layer is separated, silicone is added to it, the curing catalyst and mixed until a uniform mass is formed.

The product is transferred to ready-made molds and allowed to stand for 1 day.

The polymeric composite material obtained by the above described method comprises particles of polyvinyl ethanol with closed-type pores filled with an odorant solution placed in a polymeric matrix. The average particle size of the porous polymer is 500-3000 µm. The average pore diameter is 20-100 µm. The content of odorant is 20-80% of the mass of the material. The explosive destruction temperature of the polymeric composite material is in the range of 90-180 ° C.

When a certain temperature is reached, the filler boils up, which leads to the opening of the composite material and the release of gaseous products into the atmosphere, where their presence can be detected by smelling and will be a signal of the electrical equipment malfunction. The change in the composition of the filler and the polymeric matrix makes it possible to vary the temperature of the opening of the material.

Since the gaseous substances released by heating the composite material are not present under normal conditions in the atmosphere, and also because they are released at relatively low temperatures (before the thermal decomposition of the materials from which wires and wiring devices are made), the invention composition material allows to detect potentially fire hazardous situations long before the appearance of smoke or open fire.

Thus, the polymeric composite material of the invention makes it possible to detect pre-fire situations much earlier than the existing analogues. Due to the use of thermosetting polymers and direct contact of the material with the heating section of the electrical circuit, a high rate of appearance of the overheating signal is ensured.

The study of the opening capability of the polymeric composite material was carried out by thermogravimetric method. The sample was heated from the room temperature to a temperature of 300 ° C at a rate of 10 ° C per minute, while the mass of the sample was measured.

In the following examples, all percentages are given by weight, unless otherwise indicated. It should be understood that these examples, while demonstrating the preferred embodiments of the present invention, are given for illustrative purposes only and are not to be construed as limiting the scope of the claimed invention.

### Example.

Aerosil (fraction 50-200 um) in an amount of 10 grams is mixed with 150 g of a 40% solution of ethyl mercaptan in R-114B2 halon and left for a day being intensively stirred. The sediment is decanted, excess liquid is drained and 180 g of 4,4'-diphenylmethane diisocyanate are added. Large inclusions are separated, the residue is thoroughly mixed and 15 g of polyethylene polyamine are introduced within 5 minutes. After obtaining a homogeneous mass, the product is distributed into the molds and allowed to stand for 3 days until the finished product is obtained.

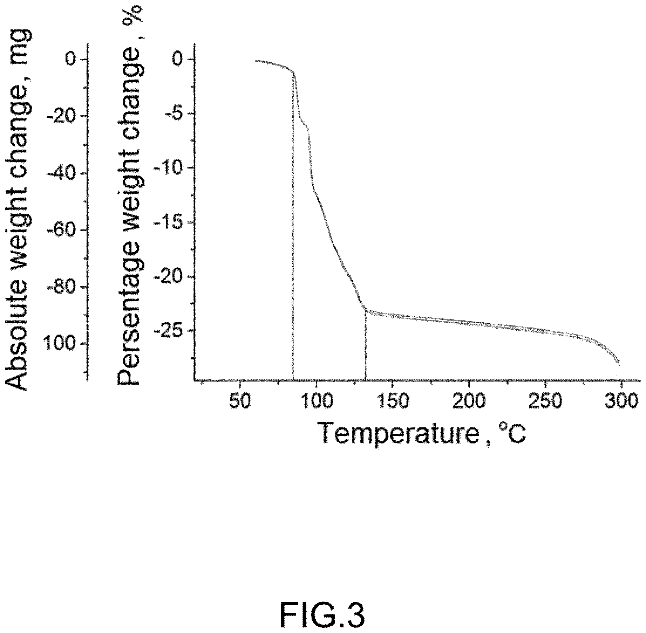

The results of thermogravimetric analysis of the obtained composite material are given in Fig.3. The explosive destruction temperature of the sample was 86-132 °C.

### Example

7 g of toluene diisocyanate are added to 200 g of a 40% solution of diethyl sulfide in R-1 14B2 halon, after which the mixture is emulsified in 100 g of an aqueous solution of polyvinyl ethanol at a concentration of 1.2 g / 1 until a uniform emulsion is obtained. 100 ml of PEPA solution in water at a concentration of 100 g / l are added and the resulting solution is allowed to stand for 24 hours. The lower layer is left to stand, separated, and 250 g of silicone (synthetic thermoresistant low-molecular SCTN rubber resin, grade A), 10 g of cold curing catalyst No. 68 are added and mixed until a homogeneous mass is formed. The product is transferred to ready-made molds and allowed to stand for 1 day.

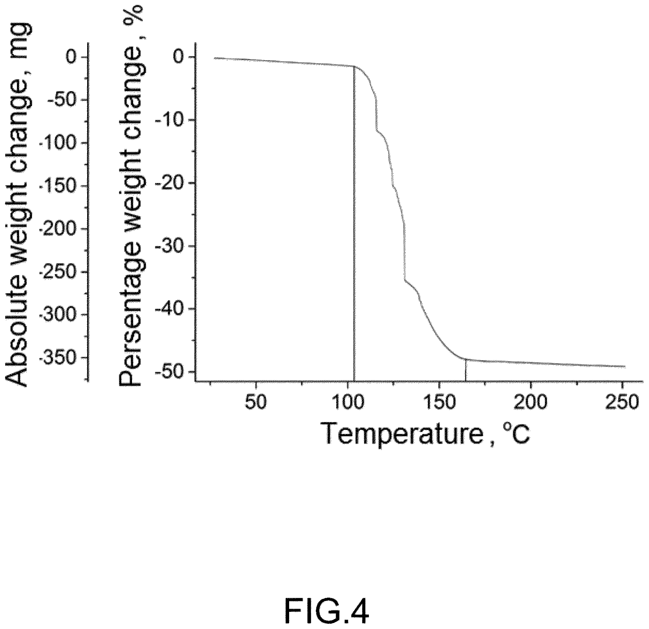

The results of thermogravimetric analysis of the obtained composite material are given in Fig.4. The explosive destruction temperature of the sample was 103-163 °C.

### Information sources:

1. Author's certificate of the USSR 1277159, IPC G08B17 / 10, 1985.
2. Patent of the Russian Federation No. 2022250, IPC G01N21 / 61, 1994.
3. Patent of the USA No. 5,654,684, IPC G08B25 / 08, G08B25 / 10, 1997
4. Author's certificate of the USSR 1696446, IPC C09D163 / 00, C09K21 / 08, 1982.
5. Patent of the Russian Federation 2403934, IPC A62D1 / 00, 2010.
6. Patent of the Russian Federation 2469761, IPC A62D1 / 00, B82B3 / 00, 2012
7. Patent document JP 6-66648, 1994.
**8.** A.P. Dolin, A.I. Karapuzikov, Yu.A. Kovalkova, "Efficiency of using a laser leak detector "KARAT" to determine the location and level of development of electrical equipment malfunction", Electro, 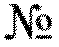 6. PP. 25-28 (2009).

## Claims

1. Polymeric composite material for early detection pre-fire situations that arise as a result of local overheating of electrical equipment, when the heating of wires or electrical contacts exceeds the permissible operating parameters, but does not yet reach the level at which the thermal destruction of material occurs,
the composite material having an explosive fracture temperature in the range of 80-200 °C and comprising a continuous phase that is constituted by a thermosetting polymer, wherein in said continuous phase closed type pores are made in which an odorant is encapsulated, the odorant being selected from sulfur dioxide, low-molecular-weight mercaptans, dialkyl sulfides dialkyl disulfides or mixtures thereof, and optionally additionally comprising a solvent selected from the group consisting of hydrofluorochlorocarbons, hydrofluorocarbons, fluorocarbons, chlorocarbons, chlorofluorocarbons, perfluoro (ethylisopropyl ketone), alkanes, ethers and mixtures thereof;
the pores are made to differ from each other both in size and shell thickness, so that their opening occurs at different pressures and temperatures and the composite material is configured to respond repeatedly to repeated heating by releasing the odorant of the pores into the environment when opening of a part of the pores occurs due to the gas of the odorant reaching a pressure corresponding to their shell strength.

2. The polymeric composite material according to claim 1, wherein the odorant is sulfur dioxide, methyl mercaptan, ethyl mercaptan, n-propyl mercaptan, isopropyl mercaptan, n-butyl mercaptan sec-butyl mercaptan, isobutyl mercaptan, tert-butyl mercaptan, amyl mercaptan, isoamyl mercaptan, hexyl mercaptan , dimethyl sulfide, diethyl sulfide, diallyldisulfide, allyl methyl sulfide, methylethylsulfide, diisopropyl sulfide, dimethyl disulphide, diethyl disulfide, dipropyl disulfide, diisopropyl disulfide, or any mixture thereof.

3. The polymeric composite material according to claim 1, wherein the continuous phase is polyvinyl acetate, epoxy resin, silicone.

## Patentansprüche

1. Polymeres Verbundmaterial zur frühzeitigen Detektion von Vor-Brand-Situationen, die durch lokale Überhitzung elektrischer Geräte entstehen, wenn die Erwärmung von Drähten oder elektrischen Kontakten die zulässigen Betriebsparameter übersteigt, aber noch nicht das Niveau erreicht, bei dem die thermische Zerstörung von Material auftritt, wobei das Verbundmaterial eine Explosionsbruchtemperatur im Bereich von 80-200 °C aufweist und eine kontinuierliche Phase umfasst, die aus einem Duroplast gebildet ist, wobei in der kontinuierlichen Phase Poren vom geschlossenen Typ ausgebildet sind, in denen ein Odoriermittel eingekapselt ist, wobei das Odoriermittel ausgewählt ist aus Schwefeldioxid, niedermolekularen Mercaptanen, Dialkylsulfiden, Dialkyldisulfiden oder Mischungen davon, und optional zusätzlich ein Lösungsmittel umfasst, ausgewählt aus der Gruppe bestehend aus Fluorchlorkohlenwasserstoffen, Fluorkohlenwasserstoffen, Fluorkohlenstoffen, Chlorkohlenstoffen, Fluorchlorkohlenstoffen, Perfluor(Ethylisopropylketon), Alkanen, Ethern und Mischungen davon; wobei die Poren so ausgebildet sind, dass sie sich sowohl in der Größe als auch in der Manteldicke voneinander unterscheiden, so dass ihre Öffnung bei unterschiedlichen Drücken und Temperaturen auftritt, und das Verbundmaterial so konfiguriert ist, dass es wiederholt auf wiederholtes Erhitzen reagiert, indem es das Odoriermittel der Poren an die Umgebung abgibt, wenn die Öffnung eines Teils der Poren aufgrund des Gases des Odoriermittels auftritt, das einen Druck erreicht, der ihrer Manteldicke entspricht.

2. Polymeres Verbundmaterial nach Anspruch 1, wobei das Odoriermittel Schwefeldioxid, Methylmercaptan, Ethylmercaptan, n-Propylmercaptan, Isopropylmercaptan, n-Butylmercaptan, sec-Butylmercaptan, Isobutylmercaptan, tert-Butylmercaptan, Amylmercaptan, Isoamylmercaptan, Hexylmercaptan, Dimethylsulfid, Diethylsulfid, Diallyldisulfid, Allylmethylsulfid, Methylethylsulfid, Diisopropylsulfid, Dimethyldisulfid, Diethyldisulfid, Dipropyldisulfid, Diisopropyldisulfid oder jegliche Mischung davon ist.

3. Polymeres Verbundmaterial nach Anspruch 1, wobei die kontinuierliche Phase Polyvinylacetat, Epoxidharz, Silikon ist.

## Revendications

1. Matériau composite polymère pour la détection précoce de situations pré-incendie qui surviennent suite à une surchauffe locale d'équipement électrique, lorsque l'échauffement des fils ou des contacts électriques dépasse les paramètres de fonctionnement admissibles mais n'atteint pas encore le niveau auquel la destruction thermique du matériau se produit,
le matériau composite présentant une température de rupture explosive dans la plage de 80 à 200 °C et comprenant une phase continue qui est constituée par un polymère thermodurcissable, dans lequel sont créés, dans ladite phase continue, des pores de type fermé dans lesquels est encapsulé un agent odorisant, l'agent odorisant étant sélectionné parmi le dioxyde de soufre, des mercaptans de bas poids moléculaire, des sulfures de dialkyle, des disulfures de dialkyle ou des mélanges de ceux-ci, et comprenant en outre éventuellement un solvant sélectionné dans le groupe composé d'hydrofluorochlorocarbones, d'hydrofluorocarbones, de fluorocarbones, de chlorocarbones, de chlorofluorocarbones, de la perfluoro-(éthylisopropylcétone), d'alcanes, d'éthers et de mélanges de ceux-ci ;
les pores étant créés pour différer les uns des autres à la fois en taille et en épaisseur d'enveloppe, de sorte que leur ouverture survient à différentes pressions et températures, et le matériau composite étant configuré pour réagir à plusieurs reprises à l'échauffement répété par libération de l'agent odorisant des pores dans l'environnement lorsque l'ouverture d'une partie des pores survient en raison du fait que le gaz de l'agent odorisant atteint une pression correspondant à leur résistance d'enveloppe.

2. Matériau composite polymère selon la revendication 1, dans lequel l'agent odorisant est le dioxyde de soufre, le méthylmercaptan, l'éthylmercaptan, le n-propylmercaptan, l'isopropylmercaptan, le n-butylmercaptan, le sec-butylmercaptan, l'isobutylmercaptan, le tert-butylmercaptan, l'amylmercaptan, l'isoamylmercaptan, l'hexylmercaptan, le sulfure de diméthyle, le sulfure de diéthyle, le disulfure de diallyle, le sulfure d'allyl-méthyle, le sulfure de méthyl-éthyle, le sulfure de diisopropyle, le disulfure de diméthyle, le disulfure de diéthyle, le disulfure de dipropyle, le disulfure de diisopropyle ou un mélange quelconque de ceux-ci.

3. Matériau composite polymère selon la revendication 1, dans lequel la phase continue est l'acétate de polyvinyle, une résine époxy, une silicone.
